# EUROPÄISCHE PATENTANMELDUNG

(11) **EP 0 583 785 A1**
(43) Veröffentlichungstag der Anmeldung: **23.02.1994**
(21) Anmeldenummer: 93113270.8
(22) Anmeldetag: 19.08.1993
(51) Int. Cl.: E03C 1/05

(54) **Auslaufarmatur mit Näherungssensor**

(30) Priorität: 20.08.1992 DE 9211188 U
(71) Anmelder: von Lepel, Freifrau, Barbara, D-74199 Untergruppenbach-Vorhof (DE)
(72) Erfinder: Schreck, Roman, D-86179 Augsburg (DE); Kurtz, Benno, D-86637 Possenried (DE)
(74) Vertreter: Riebling, Peter, Dr.-Ing., Patentanwalt

(57) **Zusammenfassung**

Beschrieben wird eine Auslaufarmatur mit Näherungssensor (10), wobei dieser zusätzlich bei einem Wasserhahn vorgesehen ist, bei dem sonst eine Näherungseinrichtung mit Näherungssensor (8) vorgesehen ist, wobei diese an sich bekannte Näherungseinrichtung mit dem Näherungssensor weggelassen werden kann. Hierdurch wird errreicht, daß impulsweise ein Wasserstrahl erzeugt wird. Je nach Annäherung kann die Impulslänge vergrößert werden oder es finden Verkleinerungen der Wasserstrahlmenge statt.

Bei mehrmaliger Annäherung an den Näherungssensor wird impulsweise die Wassermenge erhöht.

## Beschreibung

Gegenstand der vorliegenden Erfindung ist eine Wasserauslaufarmatur nach dem Oberbegriff des Patentanspruchs 1.

Derartige Wasserauslaufarmaturen werden z. B. als Waschtischarmaturen verwendet und weisen einen in der Regel an der Unterseite angeordneten Näherungsensor auf, der dazu führt, daß, wenn man mit der zu waschenden Hand oder dem zu waschenden Körperteil unter die Auslaufarmatur gerät, daß dann über ein Magnetventil der Zulauf zu der Armatur geöffnet wird. Diese Anordung hat sich bewährt, hat aber den Nachteil, daß Wasser nur solange läuft, wie das zu waschende Körperteil unmittelbar unter dem Annäherungssensor ist. Es ist daher nicht möglich, mit einer derartigen Auslaufarmatur einen Topf zu füllen, oder das Becken des Waschbeckens zu füllen, weil hierzu immer eine Hand oder ein anderes Körperteil dem Näherungssensor nahegebracht werden muß.

Der Erfindung liegt deshalb die Aufgabe zugrunde, den Verwendungszweck einer Auslaufarmatur zu erweitern.

Die Lösung der gestellten Aufgabe erfolgt durch die technische Lehre des Patentanspruchs 1.

Wesentliches Merkmal der Erfindung ist, daß nun ein weiterer Näherungssensor angeordnet ist, der auf einmalige Annäherung erstmals schaltet und für einen vorbestimmten Zeitraum den Wasserzulauf öffnet und nach Ablauf dieses Zeitraumes den Wasserzulauf schließt.

Dieser Zeitablauf des öffnens und Schließens des Wasserzulaufes nach einer festen, vorher eingestellten Zeit kann abgebrochen werden durch eine weitere Annäherung an diesen Näherungssensor, wodurch sofort der Wasserzulauf durch die zweite Annäherungsbewegung geschlossen wird.

Damit besteht nun der wesentliche Vorteil, daß man mit einem zweiten Näherungssensor zunächst bei einmaliger Annäherung einen Auslauf von z.B. 5 l oder 10 l fest einstellen kann, womit gewährleistet ist, daß man das Waschbecken ohne weiteres füllen kann indem man einmal diesen Näherungssensor betätigt.

Will man nun einen Teil des Waschbeckens füllen oder will man einen Topf oder ein anderes Gefäß mit der Auslaufarmatur füllen, dann betätigt man den neuerungsgemäßen Sensor einmal und nach Erreichen des geforderten füllvolumens wird der Näherungssensor zum zweiten Mal betätigt, wodurch dann der Wasserauslauf abgesperrt wird. Damit ist es nun ohne weiteres möglich beliebige Gefäße zu füllen, ohne daß dauernd die Hand an dem ersten - zum Stand der Technik gehörenden - Näherungssensor gehalten werden muß.

In einer ersten Ausführungsform der Erfindung ist vorgesehen, daß der Näherungssensor an der Oberseite der Auslaufarmatur angebracht ist, und zwar an deren vorderen, oberen Ende, um eine möglichst günstige Betätigung mit der Hand oder einem anderen Körperteil zu erreichen.

In einer anderen Ausgestaltung ist vorgesehen, daß der Näherungssensor nicht direkt an der Auslaufarmatur, sondern z. B. am Waschbecken oder an einer Wand hinter dem Waschbecken befestigt ist. Ebenso ist es möglich, den Näherungssensor z. B. unter dem Waschbecken zu befestigen.

Mit der gegebenen technischen Lehre wird also eine wesentliche Bedienungsvereinfachung erreicht, wobei die Mischung von Kalt- und Warmwasser bereits schon vor dem Magnetventil geschieht, welches den Wasserzulauf zu der Wasserauslaufarmatur steuert.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

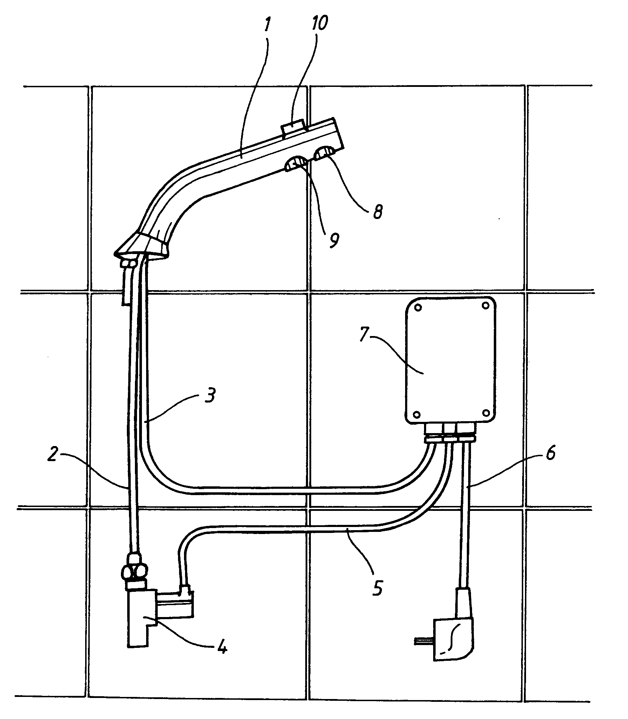

Im folgenden wird die Erfindung anhand einer lediglich einen Ausführungsweg darstellenden Zeichnung näher erläutert. Hierbei gehen aus der Zeichnung und ihrer Beschreibung weitere wesentliche Merkmale und Vorteile der Erfindung hervor.

Die Abbildung zeigt schematisiert ein Funktionsschaltbild einer Auslaufarmatur nach der Erfindung. Hierbei sind an der Unterseite einer Auslaufarmatur 1 der Wasserauslauf 9 mit einem davor liegenden Näherungssensor 8 angeordnet. An einem Magnetventil 4 mündet hierbei die Wasserzuleitung, die dann am Ausgang des Magnetventils über das Zulaufrohr 2 in die Auslaufarmatur 1 eingespeist wird.

Der Näherungssensor 8 ist über ein Steuerkabel 3 mit dem Elektronikteil 7 verbunden, welches seinerseits über eine Steuerleitung 5 das Magnetventil 4 ansteuert. An dem Elektronikteil 7 ist der Netzanschluß 6 angeschlossen.

Erfindungsgemäß ist nun ein weiterer Näherungssensor 10 bevorzugt an der Oberseite der Auslaufarmatur 1 angebracht und ebenfalls über das Steuerkabel 3 mit dem Elektronikteil 7 verbunden.

Will man nun einen Topf füllen, oder das Becken füllen, dann genügt eine einfache Handbewegung über den Näherungssensor 10, wonach dann der Elektronikteil 7 für eine fest voreingestellte Zeit von z. B. 20 Sec. das Magnetventil 4 öffnet, um so eine fest vorgegebene Wassermenge über die Auslaufarmatur 1 und den Wasserauslauf 9 in das Waschbecken abgeben zu können.

Will man eine derartige, maximale Wassermenge nicht, dann betätigt man den Näherungssensor 10 ein zweites Mal dann, wenn man wünscht, daß der Wasserauslauf 9 verschlossen wird, was dann über das Magnetventil 4 sofort erfolgt, weil dieses bei einer zweiten Annäherung über den Näherungssensor 10 geschlossen wird.

In einer Weiterbildung der Erfindung ist es vorgesehen, daß der Näherungssensor 8 - der zum Stand der Technik gehört - weggelassen wird und daß man die Schaltung nur über den Näherungssensor 10 in der vorher beschriebenen Weise durchführt.

Es ist ebenso möglich, den Elektronikteil 7 so zu schalten, daß man bei einer einmaligen Annäherung an den Näherungssensor 10 einen dauernden Wasserauslauf hat, ohne daß eine Begrenzung auf eine bestimmte Wasserauslaufzeit oder Wasserauslaufmenge stattfindet.

Ebenso ist es möglich, daß man durch mehrmalige Annährung an den Näherungssensor selbst die maximal auslaufende gewünschte Menge einstellt, z. B. in dem man bei einer einmaligen Annäherung einen Auslauf von 1 l erhält, bei zweimaliger Annäherung einen Auslauf von 2 l, bei dreimaliger Annäherung einen Auslauf von 3 l usw.

Alle diese Schaltungen und Möglichkeiten sind von dem Erfindungsgedanken der vorliegenden Erfindung umfaßt.

### ZEICHNUNGS-LEGENDE

- 1: Auslaufarmatur
- 2: Zulaufrohr
- 3: Steuerhebel
- 4: Magnetventil
- 5: Steuerleitung
- 6: Netzanschluß
- 7: Elektronikteil
- 8: Näherungssensor
- 9: Wasserauslauf
- 10: Näherungssensor

## Patentansprüche

1. Auslaufarmatur mit Näherungssensor, wobei ein Flüssigkeitsstrom erzeugt wird, der beliebig durch Annäherung zugeschaltet wird und im weiteren durch Wegnahme der Annäherung durch ein Magnetventil abgeschaltet wird, **dadurch gekennzeichnet**, daß ein zusätzlicher Näherungssensor (10) zu der an sich bekannten Annäherungsschaltung vorgesehen ist.

2. Auslaufarmatur mit Näherungssensor nach Anspruch 1, **dadurch gekennzeichnet**, daß der Näherungssensor (10) als Schaltglied mit Schaltzeiten ausgebildet ist.

3. Auslaufarmatur mit Näherungssensor nach den Ansprüchen 1 und 2, **dadurch gekennzeichnet**, daß die Annäherungsschaltung einen Näherungssensor (8) beinhaltet.

4. Auslaufarmatur mit Näherungssensor nach Anspruch 3, **dadurch gekennzeichnet**, daß der Näherungssensor (8) an der Vorderseite der Armatur vorgesehen ist, während der zusätzliche Näherungssensor (10) an der Oberseite der Hahnanordnung angeordnet ist, wobei die Anordnung am vorderen, oberen Ende insbesondere bei einem Wasserhahn vorgesehen ist.

5. Auslaufarmatur mit Näherungssensor nach Anspruch 4, **dadurch gekennzeichnet**, daß der zusätzliche Näherungssensor (10) außerhalb des Armaturenbereiches z. B. am oder unter dem Waschbecken oder dahinter angeordnet ist.
